# EUROPÄISCHE PATENTSCHRIFT

(11) **EP 2 232 678 B1**
(45) Veröffentlichungstag und Bekanntmachung des Hinweises auf die Patenterteilung: **20.06.2012**
(21) Anmeldenummer: 08862003.4
(22) Anmeldetag: 12.12.2008
(51) Int. Cl.: H02K 3/26, H02K 11/00, H02K 29/06

(54) **KLEINST-ELEKTROMOTOR MIT INTEGRIERTER MOTORSPULE**
MINIATURE ELECTRIC MOTOR HAVING INTEGRATED MOTOR COIL
MICROMOTEUR ÉLECTRIQUE À BOBINE INTÉGRÉE

(30) Priorität: 19.12.2007 DE 202007017856 U
(43) Veröffentlichungstag der Anmeldung: 29.09.2010
(73) Patentinhaber: Dr. Fritz Faulhaber GmbH & Co. KG, 71101 Schönaich (DE)
(72) Erfinder: NIENHAUS, Matthias, 55232 Alzey (DE); STEIN, Reiner, 55234 Freimersheim (DE); ZANDER, Malte, 55234 Wendelsheim (DE); KLEEN, Stephan, 55131 Mainz (DE)
(74) Vertreter: Patentanwälte Dr. Solf & Zapf
(86) Internationale Anmeldenummer: PCT/EP2008/067436
(87) Internationale Veröffentlichungsnummer: WO 2009/077456

(56) Entgegenhaltungen:
- WO-A-00/63653
- DE-U1- 29 622 874

## Beschreibung

Die vorliegenden Erfindung betrifft einen Kleinst-Elektromotor, insbesondere ServoMotor, nach dem Oberbegriff des Anspruchs 1.

Ein derartiger Kleinst-Elektromotor ist aus der DE 296 22 874 U1 bekannt.

Weiterhin ist es bekannt, bei derartigen Kleinst-Elektromotoren diese mit Drehgebern, beispielsweise kapazitiven Drehgebern als zusätzliches Modul in Verlängerung der Motoreinheit zu versehen. Bei diesen kapazitiven Drehgebern wird eine als Maßstab dienende, elektrisch leitfähige Struktur mit bestimmter Geometrie relativ zu einer feststehenden Elektrodenstruktur aus mehreren elektrisch leitfähigen Anordnungen bewegt und das entstehende elektrische Signal mittels einer Abtasteinheit erfasst und in einer Auswerteschaltung ausgewertet. Hierdurch wird ein Signal für die jeweilige Winkelposition, d.h. Drehstellungsposition gewonnen. Derartige Drehgeber sind als separate Einheit in dem Motorgehäuse angeordnet, wodurch sich ebenfalls der Bauraum des Motors vergrößert. Ein derartiger Drehgeber ist aus der WO00/63653 bekannt.

Der vorliegenden Erfindung liegt die Aufgabe zu Grunde, einen Kleinst-Elektromotor der eingangs beschriebenen Art zu schaffen, der sich durch eine besonders kleine Bauform mit wenig Einzelteilen auszeichnet.

Diese Aufgabe wird durch einen Kleinst-Elektromotor der eingangs beschriebenen Art gelöst, bei dem erfindungsgemäß vorgesehen ist, dass der Positionscodierer als kapazitiver Positionscodierer ausgebildet ist, dessen Elektrodenstrukturen zwischen dem feststehenden Teil und dem rotierenden Teil integriert sind, wobei ein Teil der Elektrodenstrukturen auf dem Schaltungsträger und der mit diesem zusammenwirkende andere Teil der Elektrodenstrukturen auf dem rotierenden Teil ausgebildet sind, indem die Motorspule und die Elektrodenstrukturen planar und radial nebeneinander auf dem Schaltungsträger ausgebildet sind und die Elektrodenstrukturen des Schaltungsträgers als Transmitter oder Receiver dienen und die eine Elektrodenstruktur als äußere Elektrodenstruktur ringförmig ist und die andere Elektrodenstruktur aus einzelnen Ringsegmenten besteht, sowie die Elektrodenstrukturen des rotierenden Teils Receiver- oder Transmitterfunktion besitzen, wobei die eine Elektrodenstruktur einen Maßstab mit einer bestimmten Geometrie bildet und die andere Elektrodenstruktur diese auf dem rotierenden Teil ringförmig umgibt, so dass ein elektrisches Messsignal, das auf Grund einer Drehbewegung erzeugt wird, von der äußeren Elektrodenstruktur des rotierenden Teils auf die ringförmige Elektrodenstruktur des Schaltungsträges übertragen wird und die als Maßstab ausgebildete Elektrodenstruktur des rotierenden Teils mit der ringsegmentförmigen Elektrodenstruktur des feststehenden Teils das Messsignal erzeugt.

Da auf der Platine des feststehenden Teils auch die Encoderstruktur vorhanden ist, stehen sehr kurze Leitungslängen für die empfindlichen Encodersignale zur Verfügung, da in der elektronischen Schaltung, die sich ebenfalls auf der Platine befindet, die Verarbeitung der Encodersignale erfolgt. Die Encodersignale können erfindungsgemäß zur Kommutierung und Positionierung verwendet werden, so dass keine Hallsensoren bei dem erfindungsgemäßen Motor für die Kommutierungssteuerung erforderlich sind, und die Steuerungssignale können über eine elektronische Schnittstelle nach außen gegeben werden.

Weitere vorteilhafte Ausbildungen der Erfindung sind in den Unteransprüchen enthalten. Anhand der in den beiliegenden Zeichnungen dargestellten Ausführungsbeispiele wird die Erfindung näher erläutert.

Es zeigen:
- Fig. 1: einen Schnitt durch einen erfindungsgemäßen Kleinstmotor,
- Fig. 2: eine perspektivische Ansicht eines feststehenden Teils des erfindungsgemäßen Motors gemäß Fig. 1, zur Darstellung der elektronischen Schaltung,
- Fig. 3: eine Ansicht des feststehenden Teils gemäß Fig. 2, jedoch auf die andere Seite des feststehenden Teils,
- Fig. 4: eine Ansicht des rotierenden Teils des erfindungsgemäßen Kleinst-Motors gemäß Fig. 1.

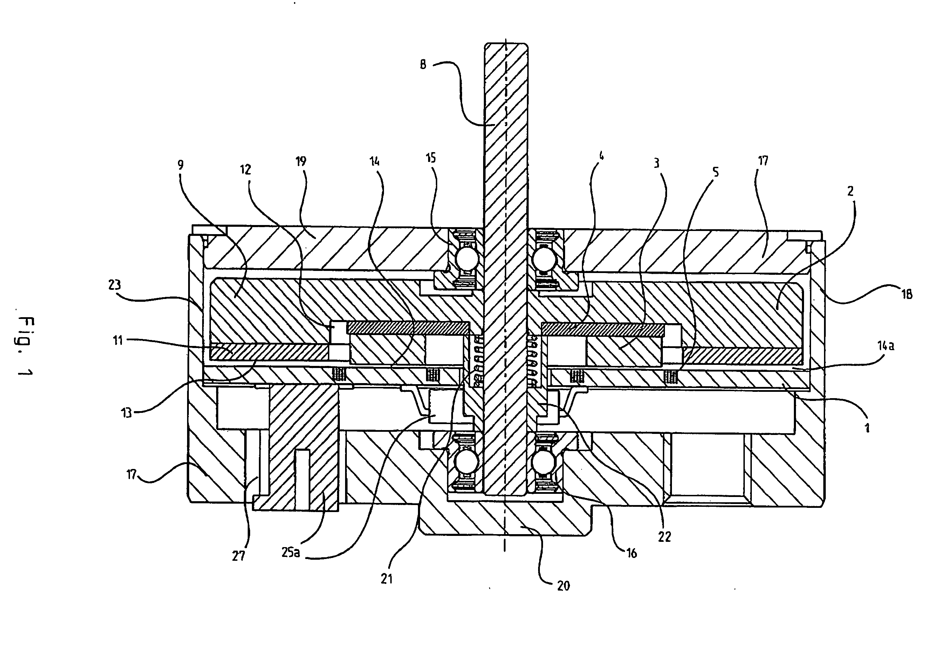

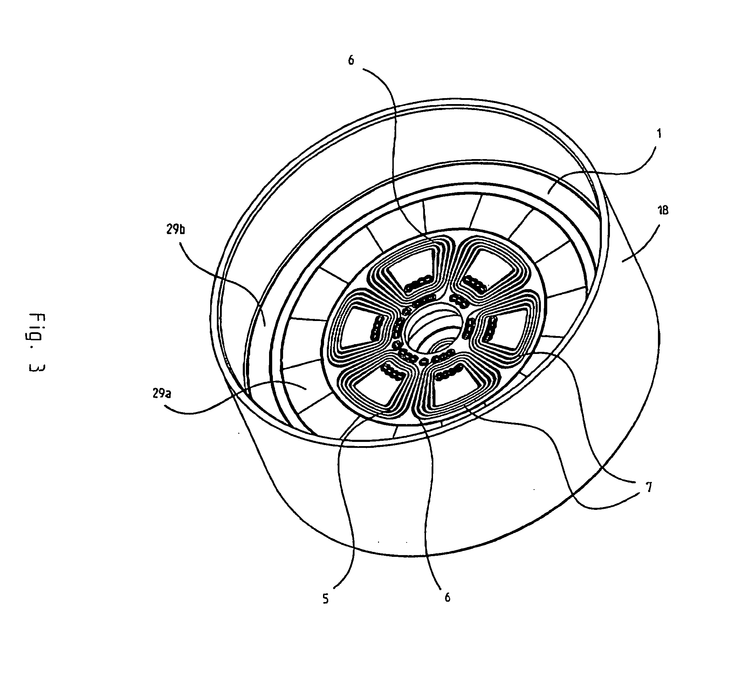

Wie in Fig. 1 dargestellt ist, besteht ein erfindungsgemäßer Kleinst-Elektromotor aus einem feststehenden Teil 1, dem so genannten Stator, und aus einem rotierenden Teil 2, dem so genannten Rotor. Das rotierende Teil 2 ist in Bezug auf das feststehende Teil 1 drehbar gelagert. Diese beiden Teile weisen einen Dauermagneten 3 mit einem Rückschlussteil 4 sowie eine Motorspule 5 auf. Das feststehende Teil 1 besteht erfindungsgemäß aus einem Schaltungsträger, der vorzugsweise als Platine ausgebildet ist. Auf dem Schaltungsträger ist die Motorspule 5 angeordnet. Diese Motorspule 5 mit ihren Wicklungen 6 wird aus Spulen-Leiterbahnen 7 gebildet, siehe hierzu insbesondere Fig. 3, so dass die Wicklungen 6 in dem Schaltungsträger integriert sind. Hierzu wird der Schaltungsträger als Multilayerplatine in der bekannten Multilayertechnik hergestellt, wie sie bei der Herstellung von Leiterplatten üblicherweise eingesetzt wird. Alternativ kann der Schaltungsträger aus Keramikmaterial bestehen, und die Spulen-Leiterbahnen 7 werden dann in der ebenfalls bekannten Dickschichttechnik aufgebracht. Durch den Schaltungsträger verläuft eine Motorwelle 8, die mit dem rotierenden Teil 2 drehfest verbunden ist. Alternativ kann das rotierende Teil 2 auch auf einer feststehenden Motorachse drehbar gelagert sein. Im dargestellten Ausführungsbeispiel besteht das rotierende Teil 2 aus einem scheibenförmigen Rotorträger 9 als Trägerelement für alle rotierenden Teile, d.h. dem Magneten 3, dem insbesondere weichmagnetischen Eisenrückschlussteil 4 sowie einer Rotorplatine 11 aus üblichem Leiterplattenmaterial. Der Rotorträger 9 besitzt auf seiner dem Schaltungsträger gegenüberliegenden Stirnfläche eine Vertiefung 12, und die Rotorplatine 11 ist ringförmig ausgestaltet, so dass sie die Vertiefung 12 umfasst. Im Grund der Vertiefung 12 liegt der Eisenrückschluss 4 und vor diesem der Dauermagnet 3, der die Stirnseite 13 der Rotorplatine 11 leicht axial überragt, so dass ein sehr kleiner axialer Luftspalt 14 zwischen der Rotorspule 5 und dem Dauermagneten 3 vorhanden ist. Der Rückschluss 4 und der Dauermagnet 3 sind ebenfalls ringförmig ausgebildet und konzentrisch zur Motorwelle 8 angeordnet.

Der Rotorträger 9 ist mit der Motorwelle 8 drehfest verbunden, und diese ist in zwei axial beabstandeten Lagern 15, 16 drehbar gelagert, die z. B. als Kugellager ausgebildet sind. Die Lager 15, 16 sind in einem das rotierende Teil 2 und das feststehende Teil 1 umschließenden Gehäuse 17 befestigt. Das Gehäuse 17 besteht aus einem hohlzylindrischen einseitig offenen Aufnahmeteil 18, in dem das rotierende Teil 2 und das feststehende Teil 1 aufgenommen sind sowie aus einem das Aufnahmeteil 18 an seinem offenen Ende verschließenden Deckelteil 19. Das Gehäuse ist vorteilhaft derart ausgebildet, dass es eine elektrische Schirmwirkung besitzt. Dieses Deckelteil 19 ist mit dem Aufnahmeteil 18 verbunden. Von beiden Lagern 15, 16 ist das eine Lager 15 im Deckelteil 19 und das andere Lager 16 in einem Bodenabschnitt 20 des Aufnahmeteils 18 angeordnet. Mit einer auf der Motorwelle 8 konzentrisch angeordneten Feder 21, insbesondere Druckfeder, die sich einendig an dem Rotorträger 9 abstützt und anderendig an einer zwischen dem Lager 16 und dem Rotorträger 9 geordneten Distanzhülse 22, werden die Lager 15, 16 vorgespannt, wodurch ein präziser Lauf des Motors sichergestellt wird. Der Schaltungsträger ist in einer inneren Umfangswandung 23 des Aufnahmeteils 18 befestigt.

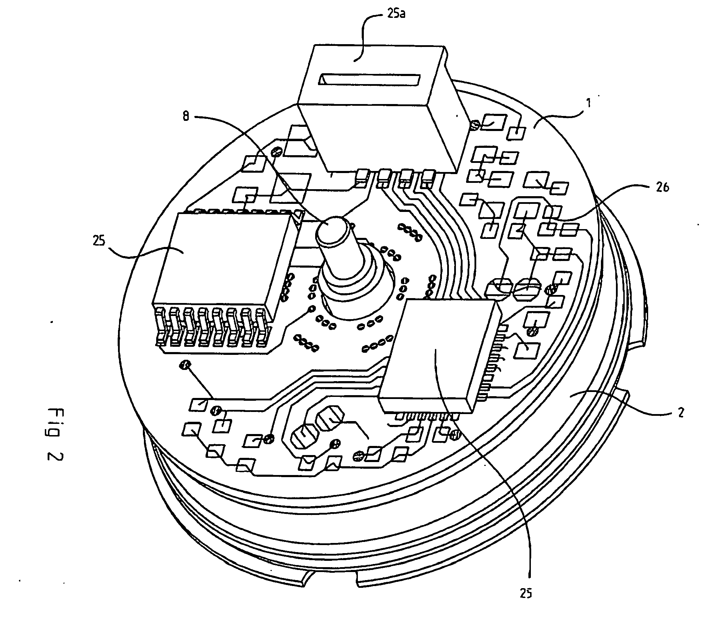

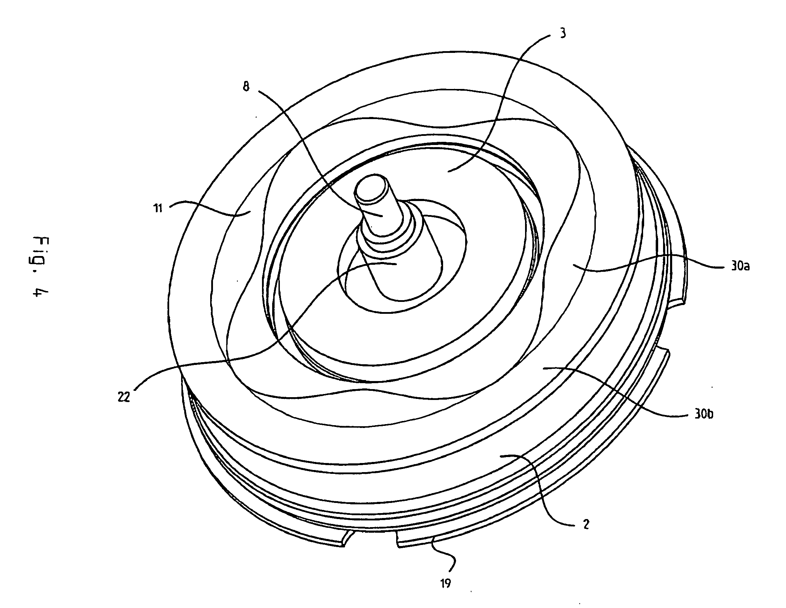

In Fig. 2 ist der Schaltungsträger dargestellt, und zwar eine Ansicht auf seine vom rotierenden Teil 2 abgekehrten Seite. Hier ist zu erkennen, dass auf dem Schaltungsträger eine elektronische Schaltung 25 mit Hilfe einer üblichen Verdrahtung 26 angeordnet ist. Wie in Fig. 1 zu ersehen ist, können im Bodenabschnitt 20 Ausnehmungen bzw. Öffnungen 27 vorhanden sein, die die auf dem Schaltungsträger angeordneten Elektronikbauteile 25a aufnehmen. Zwischen dem feststehenden Teil 1 und dem rotierenden Teil 2 ist ein Positionscodierer ausgebildet, so dass der zwischen diesen beiden Teilen bestehende Luftspalt einen Encoderluftspalt 14a bildet. Im dargestellten Ausführungsbeispiel handelt es sich um einen kapazitiven Positionscodierer, der aus elektrisch leitfähigen, flächenförmigen Elektrodenstrukturen 29a, 29b, siehe Fig. 3, auf dem Schaltungsträger auf dessen dem rotierenden Teil 2 zugeordneten Seite besteht und aus elektrisch leitfähigen, flächenförmigen Elektrodenstrukturen 30a, 30b, die auf der Rotorplatine 11, siehe Fig. 4, vorhanden sind.

In der Fig. 3 ist dargestellt, dass die Elektrodenstruktur 29a Ringsegmente bildet, und zwar im dargestellten Beispiel sechzehn Ringsegmente, und die äußere Elektrodenstruktur 29b ringförmig ist. Die Elektrodenstrukturen 29a, 29b können entweder als Receiver oder als Transmitter dienen. Die Elektrodenstrukturen 29a, 29b und die Wicklungen 6 sind planar und radial nebeneinander ausgebildet. Auf der dem feststehenden Teil 1 gegenüberliegenden Fläche der Rotorplatine 11 sind die Elektrodenstrukturen 30a, 30b angeordnet, wobei die Elektrodenstruktur 30a ein Maßstab mit einer bestimmten Geometrie ist. Im vorliegenden Fall ist eine sinusfunktionsartig geformte Elektrodenstruktur vorhanden. Die Elektrodenstruktur 30b umgibt die Elektrodenstruktur 30a ringförmig. Auch hierbei können die Elektrodenstrukturen 30a, 30b Receiver- oder Transmitterfunktion besitzen. Die erfindungsgemäße Ausbildung ermöglicht es, dass die elektrisch leitfähigen Elektrodenstrukturen 29a, 29b, 30a, 30b auf dem feststehenden Teil 1 und dem rotierenden Teil 2 das elektrische Signal, das durch die Relativbewegung von feststehendem und rotierendem Teil 1, 2 erzeugt wird, vom rotierenden Teil 2 im Bereich seiner äußeren Elektrodenstruktur 30b auf die Elektrodenstruktur 29b des feststehenden Teils 1 übertragen. Von der Elektrodenstruktur 29b erfolgt dann eine Weiterleitung auf die elektronische Schaltung 25 zur Auswertung des Positionscodierersignals. Mit der sinusfunktionsartigen Elektrodenstruktur 30a wird ein analoges Messsignal erzeugt, das sinusfunktionsförmig ausgebildet ist. Die Elektrodenstruktur 30a, die den Encodermaßstab bildet, und die Encoderstruktur 29a können für eine oder mehrere Perioden pro Umdrehung ausgebildet sein, im vorliegenden Fall sind es vier Perioden pro Umdrehung. Dabei hat eine Periode pro Umdrehung den Vorteil, dass der Positionscodierer als Absolutcodierer genutzt werden kann. Eine gerade Anzahl von Perioden, wie im dargestellten Ausführungsbeispiel, pro Umdrehung hat den Vorteil, dass eventuelle Schieflagen des Rotors gegenüber der Encoderstruktur des feststehenden Teils 1 teilweise kompensiert werden. Es liegt jedoch ebenfalls im Rahmen der Erfindung, andere Ausbildungen des Maßstabes 30a und der entsprechenden elektrischen leitfähigen Strukturen 29a zu wählen, um andere Funktionsverläufe des erzeugten Messsignals zu erreichen. Wesentlich ist, dass mit dem erzeugten Messsignal eine hohe Winkelauflösung und Winkelgenauigkeit sowie eine exakte Drehzahlregelung und Positionsregelung mit einer großen Anzahl von Einzelpositionen erfolgen kann.

Es liegt ebenfalls im Rahmen der Erfindung, die Motorspule und die Encoderflächen übereinander anzuordnen, wobei unterhalb des rotorseitigen Dauermagneten die zugehörigen Encoderflächen ausgebildet sind. Hierbei ist der Dauermagnet vorzugsweise elektrisch leitfähig ausgebildet. In dem dargestellten Ausführungsbeispiel sind die Lager für die Motorwelle in dem Gehäuse 17 angeordnet. Es kann ebenfalls erfindungsgemäß möglich sein, die Lager an dem Schaltungsträger zu befestigen, so dass dieser als konstruktives Bauteil dient. In diesem Fall kann ein Gehäuse 17 entfallen und der erfindungsgemäße Elektromotor kann unmittelbar in einem Gehäuse einer größeren Einheit angeordnet werden.

Zur Auswertung des Encodersignals dient die auf dem Schaltungsträger vorhandene elektronische Schaltung 25. Damit umfasst die elektronische Schaltung 25 die Auswerteelektronik der Encodersignale und kann zusätzlich die Motorsteuerung umfassen, und zwar einschließlich der Kommutierung unter Verwendung der Encodersignale.

Die erfindungsgemäße Ausbildung des Schaltungsträgers (feststehendes Teil 1) als Träger der Motorwicklungen (6), der Encoderstruktur 29a, 29b und der elektronischen Schaltung 25 ermöglicht eine sehr hohe Integrationsdichte sowie eine starke Reduzierung der Bauteile, denn die Motorspule 5, die Encoderstrukturen 29a, 29b und die elektronische Schaltung 25, d. h. die Encoderelektronik und die Motorsteuerung befinden sich auf einer Leiterplatte. Durch diese Anordnung werden auch sehr kurze Leitungslängen für die empfindlichen Codierersignale zur Verfügung gesteln. Die erfindungsgemäße Ausbildung ermöglicht eine sehr kompakte und flache Bauform des Motors als so genannter Penny-Motor mit z. B. einem Aussendurchmesser von 22 mm und einer Dicke von 9 mm.

## Patentansprüche

1. Kleinst-Elektromotor, insbesondere Servomotor, bestehend aus einem feststehenden Teil (1) (Stator) und einem mit diesem zusammenwirkenden rotierenden Teil (2) (Rotor), wobei diese Teile (1, 2) eine Motorspule (5) und einen Dauermagneten (3) aufweisen, sowie aus einem Schaltungsträger, der eine elektronische Schaltung (25) aufweist, wobei der Schaltungsträger zumindest ein Teil des feststehenden Teils (1) bildet und die Motorspule (5) auf dem Schaltungsträger ausgebildet ist und ihre Wicklungen (6) von auf dem Schaltungsträger verlaufenden Spulen-Leiterbahnen (7) gebildet werden, und wobei ein Positionscodierer zwischen dem feststehenden Teil (1) und dem rotierenden Teil (2) vorhanden ist,
**dadurch gekennzeichnet, dass** der Positionscodierer als kapazitiver Positionscodierer ausgebildet ist, dessen Elektrodenstrukturen (29a, 29b und 30a, 30b) zwischen dem feststehenden Teil (1) und dem rotierenden Teil (2) integriert sind, wobei ein Teil der Elektrodenstrukturen (29a, 29b) auf dem Schaltungsträger und der mit diesem zusammenwirkende andere Teil der Elektrodenstrukturen (30a, 30b) auf dem rotierenden Teil (2) ausgebildet sind, indem die Motorspule (5) und die Elektrodenstrukturen (29a, 29b) planar und radial nebeneinander auf dem Schaltungsträger ausgebildet sind, und die Elektrodenstrukturen (29a, 29b) als Transmitter oder Receiver dienen und die eine Elektrodenstruktur (29b) als äußere Elektrodenstruktur ringförmig ist und die andere Elektrod struktur (29a) aus einzelnen Ringsegmenten besteht, sowie die Elektrodenstrukturen (30a, 30b) Receiver- oder Transmitterfunktion besitzen, wobei die eine Elektrodenstruktur (30a) einen Maßstab mit einer bestimmten Geometrie bildet und die andere Elektrodenstruktur (30b) die Elektrodenstruktur (30a) ringförmig umgibt, so dass ein elektrisches Messsignal, das auf Grund einer Drehbewegung erzeugt wird, von der äußeren Elektrodenstruktur (30b) des rotierenden Teils (2) auf die Elektrodenstruktur (29b) des Schaltungsträgers (1) übertragen wird und die als Maßstab ausgebildete Elektrodenstruktur (30a) des rotierenden Teils (2) mit der ringsegmentförmigen Elektrodenstruktur (29a) des Schaltungsträgers (1) das Messsignal erzeugt.

2. Elektromotor nach Anspruch 1,
**dadurch gekennzeichnet, dass** der Schaltungsträger eine elektronische Schaltung (25) mit einer Encoderauswerteelektronik trägt.

3. Elektromotor nach Anspruch 1 oder 2,
**dadurch gekennzeichnet, dass** der Schaltungsträger die elektronische Schaltung (25), insbesondere zur Motoransteuerung, Regelung und Kommutierung trägt.

4. Elektromotor nach einem der Ansprüche 1 bis 3,
**dadurch gekennzeichnet, dass** der schaltungsträger als Multilayer-Leiterplatte ausgebildet ist.

5. Elektromotor nach einem der Ansprüche 1 bis 3,
**dadurch gekennzeichnet, dass** der Schaltungsträger aus Keramikmaterial mit in Dickschichttechnik aufgebrachten Leiterbahnen, insbesondere für die Ausbildung der Motorspule (5), besteht.

6. Elektromotor nach einem der Ansprüche 1 bis 5,
**dadurch gekennzeichnet, dass** der Schaltungsträger als konstruktives Bauteil zur Aufnahme von Lagern (15, 16) insbesondere für die Motorwelle (8) dient.

7. Elektromotor nach einem der Ansprüche 1 bis 6,
**dadurch gekennzeichnet, dass** der Schaltungsträger in einem topfförmigen Gehäuse (17) angeordnet ist, wobei das Gehäuse (17) einen Bodenabschnitt (20) und ein diesen umfänglich umgebendes Aufnahmeteil (18) besitzt, in dem der Schaltungsträger (1) parallel zum Boden verlaufend befestigt ist.

8. Elektromotor nach Anspruch 7,
**dadurch gekennzeichnet, dass** dasGehäuse(17)miteinem Gehäusedeckel (19) verschließbar ist.

9. Elektromotor nach Anspruch 8,
**dadurch gekennzeichnet, dass** im Bodenabschnitt (20) und im Deckel (19) Lager (15, 16) zur Lagerung der Motorwelle (8) angeordnet sind.

10. Elektromotor nach Anspruch 9,
**dadurch gekennzeichnet, dass** die Lager (15, 16), insbesondere als Kugellager ausgebildet sind, und durch eine konzentrisch zur Motorwelle (8) angeordnete Feder (21) im montierten Zustand vorgespannt werden.

11. Elektromotor nach einem der Ansprüche 1 bis 10,
**dadurch gekennzeichnet, dass** die vom Encoder (29a, 29b, 30a, 30b) erzeugten Encodersignale zur Kommutierung der Motorspannung verwendet werden.

## Claims

1. Miniature electric motor, in particular servomotor, consisting of a stationary part (1) (stator) and a rotating part (2) (rotor) cooperating therewith, these parts (1, 2) having a motor coil (5) and a permanent magnet (3), and of a circuit carrier having an electronic circuit (25), the circuit carrier forming at least part of the stationary part (1), and the motor coil (5) being formed on the circuit carrier and the windings (6) thereof being formed by coil conductor tracks (7) running on the circuit carrier, and a position encoder being present between the stationary part (1) and the rotating part (2),
**characterised in that** the position encoder is formed as a capacitive position encoder, the electrode structures (29a, 29b and 30a, 30b) of which are integrated between the stationary part (1) and the rotating part (2), one part of the electrode structures (29a, 29b) being formed on the circuit carrier and the other part of the electrode structures (30a, 30b), cooperating therewith, being formed on the rotating part (2), by the motor coil (5) and the electrode structures (29a, 29b) being formed in a planar manner and radially adjacent to one another on the circuit carrier, and the electrode structures (29a, 29b) serving as transmitters or receivers and one electrode structure (29b) as an outer electrode structure being annular and the other electrode structure (29a) consisting of individual annular segments, and the electrode structures (30a, 30b) having a receiver or transmitter function, one electrode structure (30a) forming a scale with a specific geometry and the other electrode structure (30b) surrounding the electrode structure (30a) annularly, so that an electrical measurement signal produced on the basis of a rotary movement is transmitted from the outer electrode structure (30b) of the rotating part (2) to the electrode structure (29b) of the circuit carrier (1), and the electrode structure (30a), formed as a scale, of the rotating part (2) produces, with the annular-segment-shaped electrode structure (29a) of the circuit carrier (1), the measurement signal.

2. Electric motor according to Claim 1,
**characterised in that** the circuit carrier carries an electronic circuit (25) with encoder evaluation electronics.

3. Electric motor according to Claim 1 or 2,
**characterised in that** the circuit carrier carries the electronic circuit (25), in particular for motor drive, regulation and commutation.

4. Electric motor according to one of Claims 1 to 3,
**characterised in that** the circuit carrier is formed as a multilayer printed circuit board.

5. Electric motor according to one of Claims 1 to 3,
**characterised in that** the circuit carrier consists of ceramic material with conductor tracks deposited using the thick-film technique, in particular for forming the motor coil (5).

6. Electric motor according to one of Claims 1 to 5,
**characterised in that** the circuit carrier serves as a structural component for receiving bearings (15, 16), in particular for the motor shaft (8).

7. Electric motor according to one of Claims 1 to 6,
**characterised in that** the circuit carrier is arranged in a pot-shaped housing (17), the housing (17) having a bottom section (20) and a receiving part (18) which circumferentially surrounds the latter and in which the circuit carrier (1) is fastened in a manner running parallel to the bottom.

8. Electric motor according to Claim 7,
**characterised in that** the housing (17) is closable by a housing cover (19).

9. Electric motor according to Claim 6,
**characterised in that** bearings (15, 16) for mounting the motor shaft (8) are arranged in the bottom section (20) and in the cover (19).

10. Electric motor according to Claim 9,
**characterised in that** the bearings (15, 16) are formed in particular as ball bearings, and are prestressed in the mounted state by a spring (21) arranged concentrically with respect to the motor shaft (8).

11. Electric motor according to one of Claims 1 to 10,
**characterised in that** the encoder signals produced by the encoder (29a, 29b, 30a, 30b) are used to commutate the motor voltage.

## Revendications

1. Petit moteur électrique, plus particulièrement un servomoteur, constitué d'une partie fixe (1) (stator) et d'une partie rotative(2) (rotor) interagissant avec celle-ci, dans lequel ces parties (1, 2) comprennent une bobine de moteur (5) et un aimant permanent (3), ainsi que d'un support de circuit, qui comprend un circuit (25), dans lequel le support de circuit imprimé constitue au moins une partie de la partie fixe (1), et la bobine du moteur (5) est réalisée sur le support de circuit imprimé et ses enroulements (6) sont constitués de pistes conductrices de bobine (7) circulant sur le support de circuit imprimé et dans lequel un encodeur de position est présent entre la partie fixe (1) et la partie rotative (2),
**caractérisé en ce que** l'encodeur de position est conçu comme un encodeur de position capacitif dont les structures à électrodes (29a, 29b et 30a, 30b) sont intégrées entre la partie fixe (1) et la partie rotative (2), dans lequel une partie des structures à électrodes (29a, 29b) est réalisée sur le support de circuit imprimé et l'autre partie des structures à électrodes (30a, 30b) en interaction avec celle-ci est réalisée sur la partie rotative (2), la bobine de moteur (5) et les structures à électrodes (29a, 29b) étant juxtaposées de manière planaire et radiale sur le support de circuit, et les structures à électrodes (29a, 29b) servent d'émetteurs ou de récepteurs et l'une des structures à électrodes (29b), en tant que structure à électrodes externe, est de forme annulaire et l'autre structure à électrodes (29a) est constituée de différents segments annulaires, et les structures à électrodes (30a, 30b) possèdent des fonctions de récepteurs ou d'émetteurs, dans lequel l'une des structures à électrodes (30a) constitue un gabarit avec une géométrie déterminée et l'autre structure à électrodes (30b) entoure la structure à électrodes (30a) grâce à sa forme annulaire, de façon à ce qu'un signal de mesure extérieur, généré par un mouvement de rotation, soit transmis de la structure à électrodes externe (30b) de la partie rotative (2) vers la structure à électrodes (29b) du support de circuit imprimé (1) et la structure à électrodes (30a), formée comme un gabarit, de la partie rotative (2), génère le signal de mesure avec la structure à électrodes (29a) à segments annulaires du support de circuit imprimé (1).

2. Moteur électrique selon la revendication 1,
**caractérisé en ce que** le support de circuit imprimé supporte un circuit électronique (25) avec une électronique d'analyse à encodeur.

3. Moteur électrique selon la revendication 1 ou 2,
**caractérisé en ce que** le support de circuit imprimé supporte un circuit électronique (25), plus particulièrement pour le contrôle du moteur, la régulation et la commutation.

4. Moteur électrique selon l'une des revendications 1 à 3,
**caractérisé en ce que** le support de circuit imprimé est conçu comme un circuit imprimé multicouche.

5. Moteur électrique selon l'une des revendications 1 à 3,
**caractérisé en ce que** le support de circuit imprimé est constitué d'un matériau céramique avec des pistes conductrices appliquées en couches épaisses, plus particulièrement pour la formation de la bobine de moteur (5).

6. Moteur électrique selon l'une des revendications 1 à 5,
**caractérisé en ce que** le support de circuit imprimé sert de composant structurel pour le logement de paliers (15, 16), plus particulièrement pour l'arbre du moteur (8).

7. Moteur électrique selon l'une des revendications 1 à 6,
**caractérisé en ce que** le support de circuit imprimé est disposé dans un boîtier en forme de cloche (17), dans lequel le boîtier (17) comprend une partie de fond (20) et une partie de logement (18) qui entoure celle-ci entièrement et dans laquelle le support de circuit imprimé (1) est fixé parallèlement au fond.

8. Moteur électrique selon la revendication 7,
**caractérisé en ce que** le boîtier (17) peut être fermé à l'aide d'un couvercle de boîtier (19).

9. Moteur électrique selon la revendication 8,
**caractérisé en ce que**, dans la partie de fond (20) et dans le couvercle (19) des paliers (15, 16) sont disposés pour le logement de l'arbre du moteur (8).

10. Moteur électrique selon la revendication 9,
**caractérisé en ce que** les paliers (15, 16) sont conçus plus particulièrement sous la forme de roulements à billes et sont précontraints à l'état monté par un ressort (21) monté de manière concentrique par rapport à l'arbre du moteur (8).

11. Moteur électrique selon l'une des revendications 1 à 10,
**caractérisé en ce que** les signaux d'encodeur générés par l'encodeur (29a, 29b, 30a, 30b) sont utilisés pour la commutation de la tension du moteur.
